(19) Europäisches Patentamt
European Patent Office
Office européen des brevets

(11) **EP 4 628 939 A1**

(12) **EUROPEAN PATENT APPLICATION**
published in accordance with Art. 153(4) EPC

(43) Date of publication:
**08.10.2025 Bulletin 2025/41**

(21) Application number: **23896198.1**

(22) Date of filing: **13.09.2023**

(51) International Patent Classification (IPC):
*G01S 17/06* (2006.01)   *G01S 17/86* (2020.01)
*G01S 7/48* (2006.01)   *G06V 20/64* (2022.01)
*G06V 10/762* (2022.01)   *G06T 7/80* (2017.01)
*G06T 7/73* (2017.01)

(86) International application number:
**PCT/CN2023/118452**

(87) International publication number:
**WO 2024/114041 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.12.2022   CN 202211534164**

(71) Applicant: **Shenzhen Pudu Technology Co., Ltd.
Shenzhen, Guangdong 518000 (CN)**

(72) Inventor: **GAN, Lei
Shenzhen, Guangdong 518000 (CN)**

(74) Representative: **Murgitroyd & Company
165-169 Scotland Street
Glasgow G5 8PL (GB)**

(54) **POSITIONING METHOD AND APPARATUS, ROBOT AND STORAGE MEDIUM**

(57)   A positioning method and apparatus, a robot, and a storage medium. The positioning method includes: based on a photographed image captured by a camera provided on a robot, determining calibration information of each object in the photographed image (S201); based on actual point cloud data captured by a LiDAR provided on the robot, a position of the camera and a position of the LiDAR, obtaining virtual point cloud data corresponding to the actual point cloud data (S202); and, based on the calibration information of each object and the virtual point cloud data, determining position information of each object (S203).

Based on a photographed image captured by a camera provided on the robot, determining calibration information of each object in the photographed image, — S201

Based on actual point cloud data obtained by a LiDAR provided on the robot, a position of the camera, and a position of the LiDARA, obtaining virtual point cloud data corresponding to the actual point cloud data — S202

Determining position information of each object based on the calibration information of each object and the virtual point cloud data — S203

FIG. 2

## Description

## CROSS-REFERENCE TO RELATED APPLICATIONS

The present application claims priority to Chinese patent application No. 2022115341643, filed on December 2, 2022, and entitled "POSITIONING METHOD AND APPARATUS, ROBOT AND STORAGE MEDIUM", the entire content of which is incorporated herein by reference.

## TECHNICAL FIELD

The present disclosure relates to the field of LiDAR ranging technologies, and in particular, to a positioning method and apparatus, a robot, and a storage medium.

## BACKGROUND

With the continuous development of LiDAR technology, the fusion of LiDAR and camera can determine the position information of a target more accurately. A robot can detect a target object through LiDAR and camera at the same time to obtain 3D position information of the target object.

In the related technology, both an RGB camera and a LiDAR are installed on a robot. In order to obtain 2D image information of a target object more accurately, the RGB camera is installed at a relatively high position, while the LiDAR, which is used for both obstacle avoidance and point cloud image collection, is installed at a relatively low position. Image information collected by the RGB camera is fused with point cloud information collected by the LiDAR to obtain the 3D position information of the target object.

Since the RGB camera has a blind spot, when using the existing technology, images collected by the RGB camera and point cloud information collected by the LiDAR may not be fused, thereby failing to obtain the 3D position information of the target object.

## SUMMARY

According to various embodiments of the present disclosure, a positioning method and apparatus, a robot, and a storage medium are provided.

In a first aspect, a positioning method is provided in the present disclosure. The method includes: determining, based on a photographed image captured by a camera provided on the robot, calibration information of each object in the photographed image; obtaining, based on actual point cloud data obtained by a LiDAR provided on the robot, a position of the camera, and a position of the LiDAR, virtual point cloud data corresponding to the actual point cloud data; and determining position information of each object based on the calibration information of each object and the virtual point cloud data.

In a second aspect, a positioning apparatus is further provided in the present disclosure. The apparatus includes:

a first determination module configured to determine, based on a photographed image captured by a camera provided on the robot, calibration information of each object in the photographed image;
a first obtaining module configured to obtain, based on actual point cloud data obtained by a LiDAR provided on the robot, a position of the camera, and a position of the LiDAR, virtual point cloud data corresponding to the actual point cloud data; and
a second determination module configured to determine position information of each object based on the calibration information of each object and the virtual point cloud data.

In a third aspect, a robot is further provided in the present disclosure. The robot includes a memory and a processor. The memory stores a computer program. When the computer program is executed by the processor, any step of the method in the first aspect is implemented.

In a fourth aspect, a computer-readable storage medium is further provided in the present disclosure. A computer program is stored on the computer-readable storage medium. When the computer program is executed by a processor, any step of the method in the first aspect is implemented.

In a fifth aspect, a computer program product is further provided in the present disclosure. The computer program product includes a computer program. When the computer program is executed by a processor, any step of the method in the first aspect is implemented.

Details of one or more embodiments of the present disclosure are proposed in the following accompanying drawings and description. Other features and advantages of the present disclosure will become apparent from the description, the accompanying drawings, and the claims.

## BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Apparently, the drawings described below are only some embodiments of the present disclosure. For ordinary technicians in this field, drawings of other embodiments can be obtained based on these drawings without paying any creative efforts.

FIG. 1 is a diagram of an application environment of a positioning method in an embodiment.
FIG. 2 is a schematic flowchart of a positioning method in an embodiment.

FIG. 3 is a schematic diagram of a detection box of an object in a photographed image in an embodiment.

FIG. 4 is a schematic diagram of a perception blind spot of a photographed image in an embodiment.

FIG. 5 is a schematic flowchart of a positioning method in an embodiment.

FIG. 6 is a schematic flowchart of a positioning method in an embodiment.

FIG. 7 is a schematic flowchart of a positioning method in an embodiment.

FIG. 8 is a schematic flowchart of a positioning method in an embodiment.

FIG. 9 is a schematic flowchart of a positioning method in an embodiment.

FIG. 10 is a schematic flowchart of a positioning method in an embodiment.

FIG. 11 is a schematic diagram of actual point cloud data in an embodiment.

FIG12 is a schematic diagram of filtered point cloud data in an embodiment.

FIG. 13 is a schematic flowchart of a positioning method in an embodiment.

FIG. 14 is a schematic diagram of a clustered point cloud cluster in an embodiment.

FIG. 15 is a schematic flowchart of a positioning method in an embodiment.

FIG. 16 is a schematic diagram of projection of virtual point cloud data on a photographed image in an embodiment.

FIG. 17 is a block diagram of a structure of a positioning apparatus in an embodiment.

## DETAILED DESCRIPTION OF THE EMBODIMENTS

In order to facilitate the understanding of the present disclosure, the present disclosure will be described more fully below with reference to the accompanying drawings. Preferred embodiments of the present disclosure are given in the accompanying drawings. However, the present disclosure can be implemented in many different forms and is not limited to the embodiments described herein. On the contrary, these embodiments are provided to understand the disclosed content of the present disclosure more thoroughly and comprehensively.

Unless otherwise defined, all technical and scientific terms used herein have the same meaning as commonly understood by those skilled in the art to which the invention belongs. The terms used in the specification of the invention herein are intended only to describe detailed embodiments and are not intended to limit the present disclosure. The term "and /or" used herein includes any and all combinations of one or more of the associated listed items.

The positioning method provided in embodiments of the present disclosure can be applied to a robot, and an internal configuration of the robot is shown in FIG.

1. A memory in the internal configuration of the robot includes a non-volatile storage medium and an internal memory. The non-volatile storage medium stores an operating system, a computer program, and a database. The internal memory provides an environment for operation of the operating system and the computer program in the non-volatile storage medium. The database is configured to store point cloud data, image data, and position data corresponding to a target. A network interface is configured to communicate with an external terminal through a network connection. When the computer program is executed by the processor, the positioning method provided in the present disclosure is implemented.

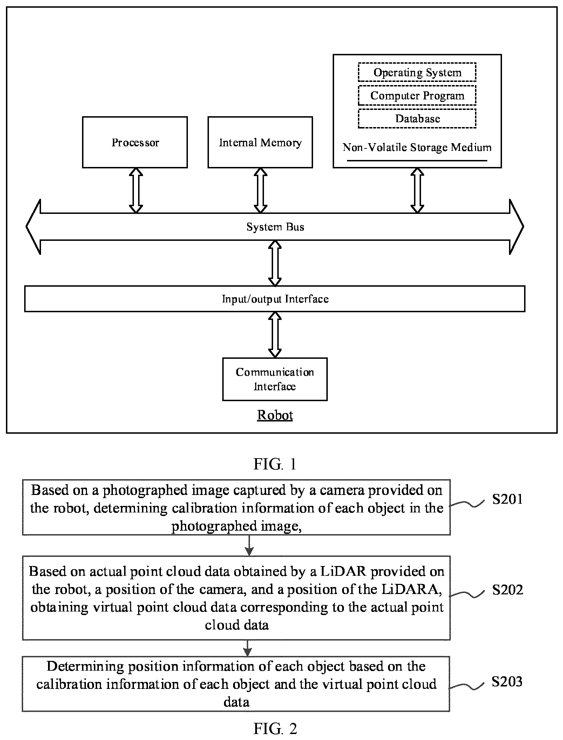

In an embodiment, as shown in FIG. 2, a positioning method is provided, which is described by taking the method applied to a robot in FIG. 1 as an example, and includes the following steps.

In S201, based on a photographed image captured by a camera provided on the robot, calibration information of each object in the photographed image is determined.

The calibration information refers to a position of each object in the photographed image. The position includes but not limited to coordinates of any point in a detection box of each object in the photographed image, a pixel width and altitude of the detection box of each object, etc. It can be understood that in order to obtain a larger shooting field of view, the camera is disposed at a relatively high position of the robot.

Specifically, after the camera captures the photographed image of a front area, the photographed image is transmitted to the robot. The robot can use the photographed image as an input signal and input it into a commonly used target detection model. Each object in the photographed image is calibrated by the target detection model to obtain the detection box of each object in the photographed image. The detection box can be used as the calibration information of the object. The commonly used target detection model may be Fast-RCNN model (Fast-Regions with CNN Features), CenterNet model, Yolo model, etc.

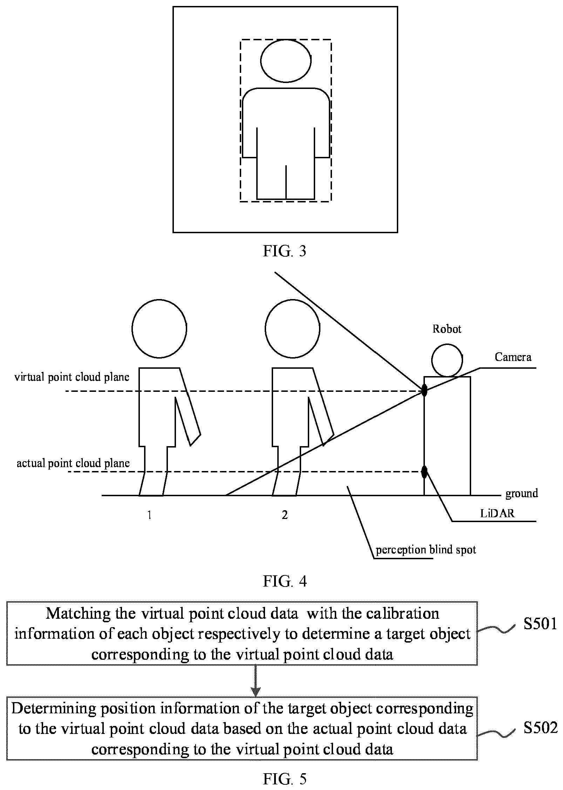

Furthermore, it is understandable that the camera provided on the robot is an RGB camera, which cannot obtain depth information of each object. The object in the photographed image captured by the RGB camera may be a pedestrian, an obstacle, an animal, etc., and the detection box of each object may be a rectangle, a circle, a semicircle, an irregular shape, etc. FIG. 3 is a schematic diagram of the detection box of the object in the photographed image. In FIG. 3, for example, the object in the photographed image is a pedestrian, and the detection box is a rectangle. A dotted box in FIG. 3 represents the detection box of the pedestrian, and the calibration information of the pedestrian in the photographed image may be expressed as $(x, y, w, h)$, where $x$ and $y$ may be coordinates of any of four corner points of the pedestrian detection box in the photographed image, and $w$ and $h$ represent pixel width and altitude of the detection box of the pedestrian.

In S202, based on actual point cloud data obtained by a LiDAR provided on the robot, a position of the camera, and a position of the LiDAR, virtual point cloud data corresponding to the actual point cloud data is obtained.

A single-line LiDAR can not only be used for localization and mapping or simultaneous localization and mapping (SLAM), but also for obstacle avoidance. Therefore, the single-line LiDAR is generally installed at a relatively low position on the robot.

Optionally, a server can obtain virtual point cloud data at the same altitude as the camera based on the actual point cloud data to obtain virtual point cloud data corresponding to the actual point cloud data. Alternatively, the server can determine a highest position of a shooting blind spot of the object closest to the robot according to the calibration information of each object in the photographed image, and obtain virtual point cloud data at the highest position of the shooting blind spot between the camera and the LiDAR according to the actual point cloud data, so that virtual point cloud data corresponding to the actual point cloud data is obtained. Alternatively, an altitude difference between the highest position of the shooting blind spot and an installation position of the camera is obtained, and virtual point cloud data is determined according to the altitude difference and the actual point cloud data, so that the virtual point cloud data corresponding to the actual point cloud data is obtained. The altitude of the virtual point cloud data is not limited in the embodiment.

Further, it can be understood that FIG. 4 is a schematic diagram of a perception blind spot of a photographed image. The objects in FIG. 4 include pedestrian 1 and pedestrian 2. The camera can capture a full-body image of pedestrian 1, and the LiDAR can also capture depth information of pedestrian 1 correspondingly. Therefore, the photographed image taken by the camera and the actual point cloud data obtained by the LiDAR can be fused to obtain position information of pedestrian 1.

However, for pedestrian 2, the camera can only capture images of the part above the thigh of pedestrian 2, so a position below the thigh is determined as a shooting blind spot, and a position of the thigh is a highest position of the shooting blind spot. The LiDAR can only obtain actual point cloud data of the knee or below the knee, i.e., the actual point cloud data is not located in the photographed image taken by the camera. The actual point cloud data cannot be directly projected into the photographed image, so that the actual point cloud data cannot be fused with the photographed image, and position information of pedestrian 2 cannot be directly obtained.

Optionally, the robot may obtain an altitude difference between the highest position of the shooting blind spot and the camera, and obtain virtual point cloud data based on the altitude difference and actual point cloud data.

In S203, position information of each object is determined based on the calibration information of each object and the virtual point cloud data.

The position information of each object may be relative position information of each object relative to the robot, or position information of each object in a world coordinate system. For example, the position information may be distance information, orientation information, altitude information, speed information, posture information, etc.

Specifically, the robot can fuse the calibration information of each object in the photographed image with the virtual point cloud data, map the virtual point cloud data into the detection box of each object in the photographed image to obtain a mapping relationship between the virtual point cloud data and each object. According to a correspondence between the virtual point cloud data and the actual point cloud data, and the mapping relationship between the virtual point cloud data and each object, a correspondence between the actual point cloud data and each object can be obtained. According to the correspondence and the actual point cloud data, the position information of each object in the photographed image can be obtained.

It is understandable that when each object is not in the blind spot of the RGB camera, the position information of each object can be determined according to the calibration information of each object and the actual point cloud data collected by the LiDAR, as well as the correspondence between the actual point cloud data and each object.

In the above positioning method, based on the photographed image captured by the camera provided on the robot, the calibration information of each object in the photographed image is determined, the virtual point cloud data corresponding to the actual point cloud data is obtained according to the actual point cloud data obtained by the LiDAR provided on the robot, the position of the camera and the position of the LiDAR, and the position information of each object is determined according to the calibration information of each object and the virtual point cloud data. In this method, by determining the calibration information of each object in the photographed image, each object in the photographed image can be accurately distinguished. The virtual point cloud data corresponding to the actual point cloud data can be obtained according to the actual point cloud data, the position of the camera and the position of the LiDAR, thereby avoiding the problem that the actual point cloud data cannot be matched with the photographed image due to the altitude difference between the camera and the LiDAR. In the method, the actual point cloud data corresponding to each object is determined according to obtained correspondence between the virtual point cloud data and the calibration information of each object, and the position information of each object in the area in front of the robot can be obtained accurately, eliminating the shooting blind spot of the camera and improving perception ability of the robot for a close-range object.

FIG. 5 is a flowchart of a positioning method provided in an embodiment of the present disclosure. The embodiment of the present disclosure relates to an optional implementation method for determining the position information of each object based on the calibration information of each object and the virtual point cloud data. On the basis of the embodiment shown in FIG. 2, as shown in FIG. 5, the above S203 may include the following steps.

In S501, the virtual point cloud data is matched with the calibration information of each object respectively to determine a target object corresponding to the virtual point cloud data.

Specifically, the robot may project the virtual point cloud data onto the photographed image, calculate a proportion of the virtual point cloud data within each object's detection box, and determine the object corresponding to a detection box with a highest proportion as the target object corresponding to the virtual point cloud data. Alternatively, the proportion of the virtual point cloud data within each object's detection box may be compared with a preset threshold, and an object corresponding to the detection box with a proportion greater than the preset threshold may be determined as the target object corresponding to the virtual point cloud data. The target object may correspond to one virtual point cloud or multiple virtual point clouds.

In S502, position information of the target object corresponding to the virtual point cloud data is determined according to the actual point cloud data corresponding to the virtual point cloud data.

Specifically, the robot obtains a correspondence between the virtual point cloud and the target object by step S501, and then obtains a correspondence between the actual point cloud data and the target object according to a correspondence between the actual point cloud data and the virtual point cloud data. By analyzing the actual point cloud data, position information of the target object corresponding to the actual point cloud data is obtained, and thus the position information of the target object corresponding to the virtual point cloud data can be obtained.

In the above positioning method, the virtual point cloud data is matched with the calibration information of each object respectively to determine the target object corresponding to the virtual point cloud data, and the position information of the target object corresponding to the virtual point cloud data is determined according to the actual point cloud data corresponding to the virtual point cloud data. In this method, according to a matching result of the virtual point cloud data and the calibration information of each object, the target object corresponding to the virtual point cloud data can be determined accurately. In this way, the target object corresponding to the actual point cloud data is determined, so that the position information of the target object can be obtained accurately according to the actual point cloud data.

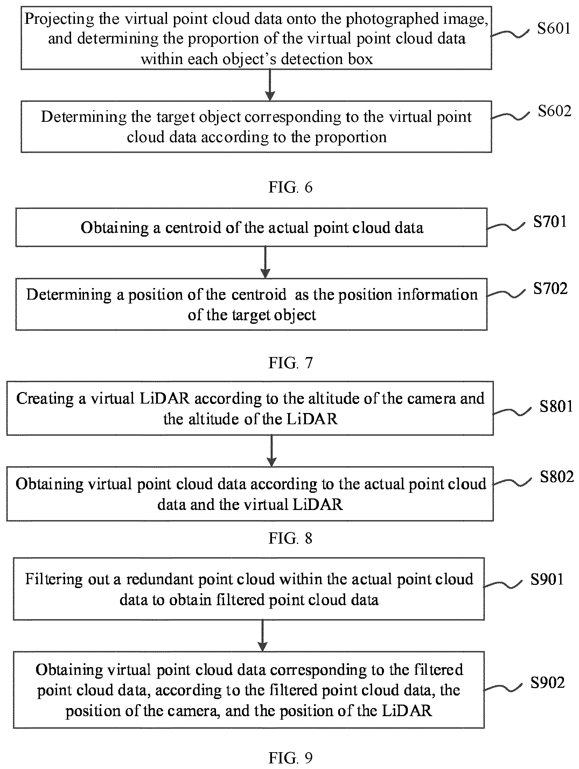

FIG. 6 is a flowchart of a positioning method provided in an embodiment of the present disclosure. The embodiment of present disclosure relates to an optional implementation method in which the calibration information includes the detection box, and the virtual point cloud data is matched with the calibration information of each object respectively to determine the target object corresponding to the virtual point cloud data. On the basis of the embodiment shown in FIG. 5, as shown in FIG. 6, the above S501 may include the following steps.

In S601, the virtual point cloud data is projected onto the photographed image, and a proportion of the virtual point cloud data within each object's detection box is determined.

Specifically, the robot can obtain calibration parameters of the camera and a virtual LiDAR, and obtain a projection matrix from the virtual point cloud data to the photographed image according to an intrinsic parameter matrix of the camera, a rotation matrix from the camera to the photographed image plane, and an extrinsic parameter matrix from the virtual point cloud to the camera. By using the projection matrix, the robot projects the virtual point cloud data onto the photographed image, and calculates the proportion of each virtual point cloud data within each object's detection box.

In S602, the target object corresponding to the virtual point cloud data is determined according to the proportion.

Optionally, the robot may arrange the proportions of the virtual point cloud data within the object's detection boxes in descending order, and determine an object corresponding to the detection box whose proportion is in the first place as the target object corresponding to the virtual point cloud data. According to the above method, the target object corresponding to each virtual point cloud data is obtained. Optionally, the robot may compare the proportion of the virtual point cloud data within each object's detection box with a preset threshold, and determine an object corresponding to a detection box whose proportion is greater than the preset threshold as the target object corresponding to the virtual point cloud data. Alternatively, the robot may calculate a difference between the proportion of the virtual point cloud data within each object's detection box and the preset threshold, compare the difference with a preset difference, and determine an object corresponding to the detection box whose difference is less than the preset difference as the target object corresponding to the virtual point cloud data. In this embodiment, a method of determining the target object corresponding to the virtual point cloud data according to the proportion is not limited.

Optionally, in another embodiment, the embodiment of the present disclosure relates to an optional implementation method of determining the target object corresponding to the virtual point cloud data according to the proportion. The above S602 may include the following steps: determining an object corresponding to the detection box whose proportion is greater than the preset threshold as the target object; or determining an object corresponding to the detection box with the highest proportion as the target object.

Specifically, the preset threshold is obtained according to historical experience. When one virtual point cloud data corresponds to one detection box, the object corresponding to the detection box with the highest proportion of the virtual point cloud data within each object's detection box is determined as the target object corresponding to the virtual point cloud data. When two or more virtual point cloud data correspond to one object's detection box, the object corresponding to the detection box with a proportion greater than the preset threshold is determined as the target object corresponding to the virtual point cloud data.

Further, it can be understood that if the proportion of the virtual point cloud data within each object's detection box is greater than the preset threshold, or if the proportion of the virtual point cloud data within each object's detection box is the highest, it is determined that all or most of the virtual point cloud data falls within the detection box, i.e., degree of match between the virtual point cloud data and the object corresponding to the detection box is the highest. Therefore, the object corresponding to the detection box greater than the preset threshold or the object corresponding to the detection box with the highest proportion is determined as the target object corresponding to the virtual point cloud data.

In the above positioning method, the object corresponding to the detection box whose proportion is greater than the preset threshold is determined as the target object, or the object corresponding to the detection box with the highest proportion is determined as the target object. In this method, different ways are used for analysis according to different situations. By comparing the proportion with the preset threshold to obtain the object corresponding to the detection box greater than the preset threshold, or by obtaining the object corresponding to the detection box with the highest proportion, the target object corresponding to a virtual point cloud image can be accurately obtained, making a process of obtaining the target object corresponding to the virtual point cloud more flexible, accurate, and more adaptable to scenes.

Furthermore, in the above positioning method, the virtual point cloud data is projected onto the photographed image, the proportion of the virtual point cloud data within each object's detection box is determined, and the target object corresponding to the virtual point cloud data is determined according to the proportion. In this method, the virtual point cloud data can be matched with the detection box of each object accurately according to the proportion of the virtual point cloud data within each object's detection box, so that the target object corresponding to the virtual point cloud data can be obtained more accurately.

FIG. 7 is a flowchart of a positioning method provided in an embodiment of the present disclosure. The embodiment of the present disclosure relates to an optional implementation method for determining the position information of the target object corresponding to the virtual point cloud data according to actual point cloud data corresponding to the virtual point cloud data. On the basis of the embodiment shown in FIG. 5, as shown in FIG. 7, the above S502 may include the following steps.

In S701, a centroid of the actual point cloud data is obtained.

Specifically, the centroid of the actual point cloud data is one point in the point cloud data, and coordinates of the centroid are obtained by calculating average values of all the point clouds within the actual point cloud data. The robot can obtain the centroid of the actual point cloud data according to a formula for calculating the centroid. The formula for calculating the point cloud centroid coordinates may be as follows:

$$P_c = \frac{1}{n}(\sum_{i=0}^{n} x_i, \sum_{i=0}^{n} y_i, \sum_{i=0}^{n} z_i)$$

where $x_i$, $y_i$ and $z_i$ are the coordinates of each point cloud data within the actual point cloud data.

In S702, a position of the centroid is determined as the position information of the target object.

Specifically, after the robot obtains the position of the centroid of the actual point cloud data by S701, the position of the centroid of the target object is the position of the target object, and the position of the centroid of the actual point cloud data is directly determined as the position information of the target object.

In the above positioning method, the centroid of the target object is obtained according to the actual point cloud data corresponding to the virtual point cloud data, and the position of the centroid is determined as the position information of the target object. In this method, the coordinate position of the centroid of the actual point cloud data can be obtained accurately according to the actual point cloud data, so that the position information of the target object can be determined more accurately.

FIG. 8 is a flowchart of a positioning method provided in an embodiment of the present disclosure. In the embodiment of the present disclosure, the position of the camera including the altitude of the camera, and the position of the LiDAR including the altitude of the LiDAR. The embodiment of the present disclosure relates to an optional implementation method of obtaining virtual point cloud data corresponding to the actual point cloud data based on the actual point cloud data obtained by the LiDAR provided on the robot, the position of the camera, and the position of the LiDAR. On the basis of the embodiment shown in FIG. 2, as shown in FIG. 8, the above S202 may include the following steps.

In S801, a virtual LiDAR is created according to the altitude of the camera and the altitude of the LiDAR.

Specifically, the robot can determine intrinsic parameters and extrinsic parameters of the virtual LiDAR according to intrinsic parameters and extrinsic parameters of the LiDAR. The intrinsic parameters include resolution and field of view of the LiDAR, etc. The extrinsic parameters include position information and angle information of the LiDAR, etc. The altitude of the virtual LiDAR is consistent with the altitude of the camera, and other parameters are consistent with parameters of the LiDAR.

In S802, virtual point cloud data is obtained according to the actual point cloud data and the virtual LiDAR.

Specifically, the robot can determine a virtual point cloud plane of the virtual LiDAR based on the parameters of the virtual LiDAR, and project the actual point cloud data obtained by the LiDAR onto the virtual point cloud plane to obtain virtual point cloud data corresponding to the actual point cloud data.

In the above positioning method, a virtual LiDAR is created according to the altitude of the camera and the altitude of the LiDAR, and the virtual point cloud data is obtained according to the actual point cloud data and the virtual LiDAR. By creating the virtual LiDAR with an altitude consistent with the altitude of the camera, the virtual point cloud data corresponding to the virtual LiDAR can be better fused with the image taken by the camera in this method, so that the target object corresponding to the virtual point cloud data can be obtained more accurately.

FIG. 9 is a flowchart of a positioning method provided in an embodiment of the present disclosure. The embodiment of the present disclosure relates to an optional implementation method for filtering the actual point cloud data. On the basis of the embodiment shown in FIG. 2, as shown in FIG. 9, the above method may further include the following step.

In S901, a redundant point cloud within the actual point cloud data is filtered out to obtain filtered point cloud data. The redundant point cloud includes other point clouds except for the point clouds of the objects.

Specifically, the redundant point cloud may include a discrete point cloud, a point cloud of an obstacle such as a wall, a counter, etc. The robot can filter out the discrete point clouds within the actual point cloud data by a commonly used filter, and then filter out a linear point cloud of the obstacle such as the wall or the counter by a straight line detection algorithm to obtain filtered point cloud data. Commonly used filters include a pass-through filter, a voxel filter, a statistical filter, a radius filter, or the like. Straight line detection algorithms include Hough straight line detection, Line Segment Detector (LSD) algorithm, or the like.

Optionally, according to the actual point cloud data obtained by the LiDAR provided on the robot, the position of the camera and the position of the LiDAR, obtaining the virtual point cloud data corresponding to the actual point cloud data includes the following step.

In S902, virtual point cloud data corresponding to the filtered point cloud data is obtained according to the filtered point cloud data, the position of the camera, and the position of the LiDAR.

Optionally, the server obtains the virtual point cloud data at the same altitude as the camera according to the filtered point cloud data, so as to obtain the virtual point cloud data corresponding to the filtered point cloud data. Alternatively, the server determines a highest position of a shooting blind spot of the object closest to the robot according to the calibration information of each object in the photographed image, and obtains virtual point cloud data at the highest position of the shooting blind spot between the camera and the LiDAR according to the filtered point cloud data to obtain the virtual point cloud data corresponding to the filtered point cloud data. Alternatively, based on the filtered point cloud data, the server obtains virtual point cloud data at any altitude between the highest position of the shooting blind spot and an installation position of the camera to obtain the virtual point cloud data corresponding to the filtered point cloud data.

In the above positioning method, the redundant point cloud within the actual point cloud data is filtered out to obtain the filtered point cloud data, and the virtual point cloud data corresponding to the filtered point cloud data is obtained according to the filtered point cloud data, the position of the camera and the position of the LiDAR. The redundant point cloud includes other point clouds except for the point clouds of the objects. Redundant point cloud data is filtered out to obtain the virtual point cloud data corresponding to the filtered point cloud data, which can avoid influence of the redundant point cloud data on the virtual point cloud data.

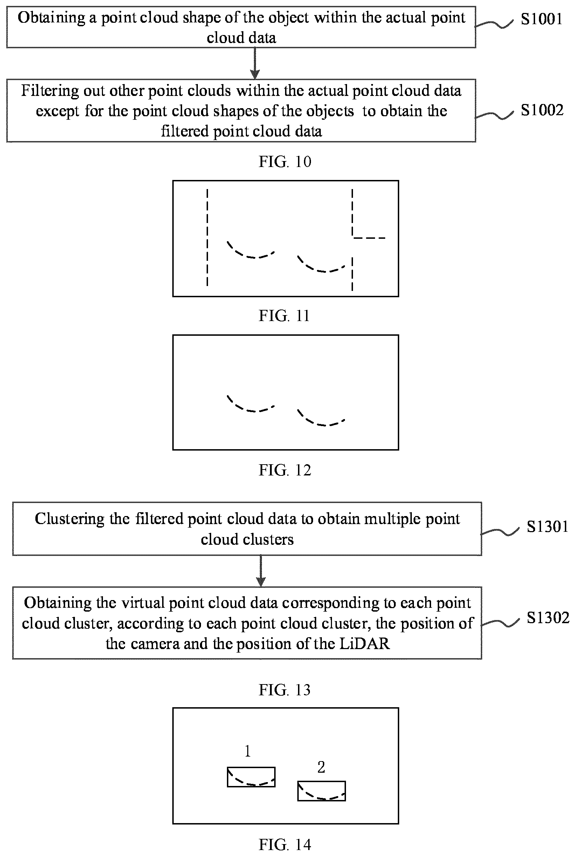

FIG. 10 is a flowchart of a positioning method provided in an embodiment of the present disclosure. The embodiment of the present disclosure relates to an optional implementation method of filtering out the redundant point cloud within the actual point cloud data to obtain filtered point cloud data. On the basis of the embodiment shown in FIG. 9, as shown in FIG. 10, the above S901 may include the following steps.

In S1001, a point cloud shape of the object within the actual point cloud data is obtained.

Specifically, for example, the object is a pedestrian, a shape of a foot is approximately an arc, and the robot can perform preset processing on the actual point cloud data to obtain a top view of the actual point cloud data, in which the shape of the pedestrian's footsteps is a top view. For example, when the object is a cylindrical obstacle, in the top view of the actual point cloud data, the point cloud shape of the cylindrical obstacle is a circle.

In S1002, other point clouds except for the point cloud shape of each object within the actual point cloud data are filtered out to obtain the filtered point cloud data.

Specifically, after determining a point cloud image of the object in S1001, the robot can filter out other point clouds except for the point cloud shape of each object by a filter and a straight line detection algorithm to obtain filtered point cloud data.

Exemplarily, FIG. 11 is a schematic diagram of the actual point cloud data, and FIG. 12 is a schematic diagram of the filtered point cloud data. In FIG. 11, since the shape of the foot of the pedestrian is approximately an arc, and the point cloud of the obstacle such as the wall or the counter is linear, the robot can detect a linear point cloud within the actual point cloud data by the straight line detection algorithm. The filtered point cloud data is in the shape of the foot of the pedestrian. In FIG. 12, the filtered point cloud data is arc-shaped point cloud data.

In the above positioning method, the top view of the actual point cloud data is obtained, the point cloud shape of the object in the top view is determined, and other point clouds except for the point cloud shape of each object within the actual point cloud data are filtered out to obtain the filtered point cloud data. In this method, the point cloud shape of the object can be obtained more accurately according to the top view of the actual point cloud data, so that other point cloud shapes except for the point cloud shape can be accurately filtered out, to obtain the virtual point cloud data more accurately based on the filtered point cloud data.

FIG. 13 is a flowchart of a positioning method provided in an embodiment of the present disclosure. The embodiment of the present disclosure relates to an optional implementation method of clustering the filtered point cloud data. On the basis of the embodiment shown in FIG. 9, as shown in FIG. 13, the above method may further include the following steps.

In S1301, the filtered point cloud data is clustered to obtain multiple point cloud clusters.

Specifically, the robot can cluster the filtered point cloud data by a commonly used clustering algorithm, and classify point cloud data belonging to a same category into one point cloud cluster to obtain multiple point cloud clusters. Commonly used clustering algorithms may include a density-based spatial clustering algorithm with noise (DBSCAN), a principal components analysis algorithm (PCA), a K-means clustering algorithm (K-means), a Gaussian Mixed Model (GMM), a spectral clustering algorithm, etc. For example, FIG. 14 shows a schematic diagram of clustered point cloud clusters, and two point cloud clusters are obtained by clustering the filtered point cloud data.

Optionally, according to the filtered point cloud data, the position of the camera, and the position of the LiDAR, obtaining the virtual point cloud data corresponding to the filtered point cloud data includes the following steps.

In S1302, virtual point cloud data corresponding to each point cloud cluster is obtained according to each point cloud cluster, the position of the camera and the position of the LiDAR.

One virtual point cloud data may correspond to one point cloud cluster or multiple point cloud clusters.

Optionally, the server can obtain virtual point cloud data at the same altitude as the camera for each point cloud cluster, to obtain virtual point cloud data corresponding to each point cloud cluster. Alternatively, the server can determine the highest position of the shooting blind spot of the object closest to the robot according to the calibration information of each object in the photographed image, and obtain virtual point cloud data at the highest position of the shooting blind spot between the camera and the LiDAR according to the filtered point cloud data, to obtain virtual point cloud data corresponding to each point cloud cluster. Alternatively, according to each point cloud cluster, virtual point cloud data at any altitude between the highest position of the shooting blind spot and the installation position of the camera is obtained, so as to obtain virtual point cloud data corresponding to each point cloud cluster.

In the above positioning method, the filtered point cloud data is clustered to obtain multiple point cloud clusters, and the virtual point cloud data corresponding to each point cloud cluster is obtained according to each point cloud cluster, the position of the camera and the position of the LiDAR. In this method, the filtered point cloud data is clustered and the point cloud data belonging to the same category is clustered into one point cloud data cluster, so that the virtual point cloud data corresponding to each point cloud cluster can be obtained more accurately.

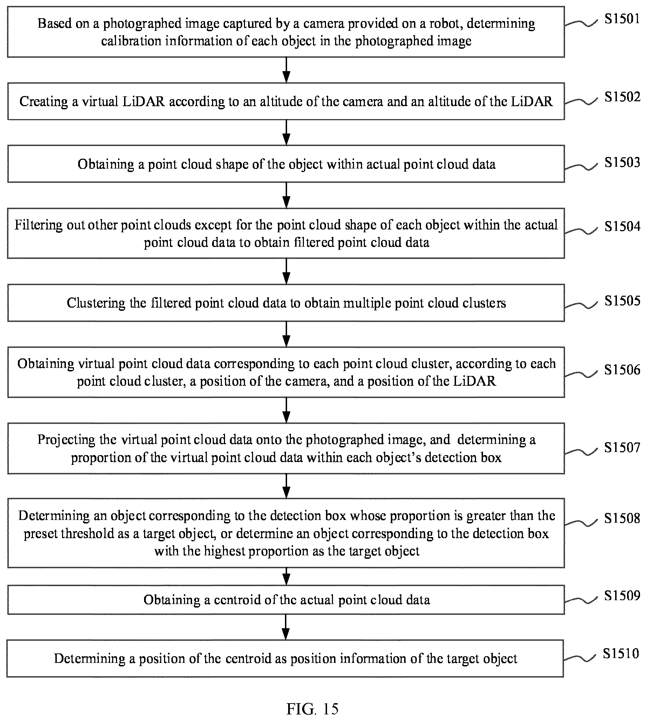

In an embodiment, in order to facilitate understanding by those skilled in the art, the positioning method is described in detail below. As shown in FIG. 15, the method may include the following steps.

In S1501, based on a photographed image captured by a camera provided on the robot, calibration information of each object in a photographed image is determined.

In S1502, a virtual LiDAR is created according to an altitude of the camera and an altitude of the LiDAR.

In S1503, a top view of actual point cloud data is obtained, and a point cloud shape of each object in the top view is determined.

In S1504, other point clouds except for the point cloud shape of each object within the actual point cloud data are filtered out to obtain filtered point cloud data.

In S1505, the filtered point cloud data is clustered to obtain multiple point cloud clusters.

In S1506, virtual point cloud data corresponding to each point cloud cluster is obtained according to each point cloud cluster, a position of the camera, and a position of the LiDAR.

In S1507, the virtual point cloud data is projected onto the photographed image, and a proportion of the virtual point cloud data within each object's detection box is determined.

In S1508, an object corresponding to the detection box whose proportion is greater than a preset threshold is determined as a target object, or an object corresponding to the detection box with the highest proportion is determined as the target object.

In S1509, a centroid of the actual point cloud data is obtained.

In S1510, a position of the centroid is determined as position information of the target object.

It should be noted that for the descriptions related to the above S1501 to S1510 can be referred to in the corresponding descriptions of the above embodiments, and the effects are similar, therefore, it will be not repeated in this embodiment.

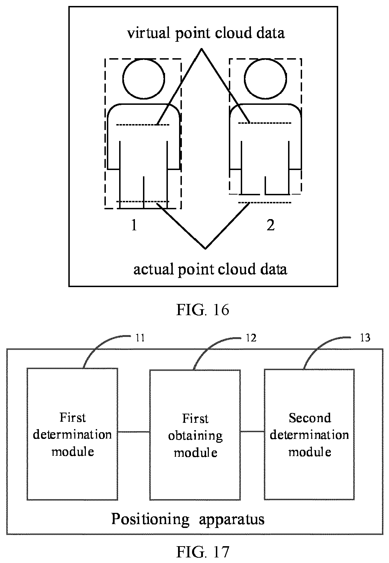

Further, it can be understood that FIG. 16 is a schematic diagram of projection of virtual point cloud data on a photographed image. Pedestrian 1 is far away from the robot and is not within the blind spot of the camera, both the actual point cloud data and the virtual point cloud data can be projected onto the photographed image. Pedestrian 2 is close to the robot, and the position below the knees of pedestrian 2 is within the blind spot of the camera. The actual point cloud data of pedestrian 2 cannot be projected onto the photographed image, but the virtual point cloud data of pedestrian 2 and pedestrian 1 can be projected onto the photographed image.

In the above positioning method, by determining the calibration information of each object in the photographed image, each object in the photographed image can be accurately distinguished. The virtual point cloud data corresponding to the actual point cloud data can be obtained according to the actual point cloud data, the position of the camera and the position of the LiDAR. By calculating the proportion of the virtual point cloud data within each object's detection box, using different ways for analysis according to different situations, and comparing the proportion with a preset threshold to obtain the object corresponding to the detection box greater than the preset threshold, or obtaining the object corresponding to the detection box with the highest proportion, the target object corresponding to the virtual point cloud image can be accurately obtained, so that the target object corresponding to the virtual point cloud data can be more accurately obtained, avoiding the problem that the actual point cloud data cannot be matched with the photographed image due to the altitude difference between the camera and the LiDAR. By determining the centroid of the target object according to the actual point cloud data, the position information of the target object can be more accurately determined, thereby improving perception ability of the robot for a close-range object.

It should be understood that, although the steps in the flowcharts involved in the above embodiments are displayed in sequence according to the indication of the arrows, these steps are not necessarily executed in sequence according to the order indicated by the arrows. Unless there is a clear explanation in this article, the execution of these steps is not strictly limited in order, and these steps can be executed in other orders. Moreover, at least a part of the steps in the flowcharts involved in the above embodiments may include multiple steps or multiple stages, and these steps or stages are not necessarily executed at the same time, but can be executed at different times, and the execution order of these steps or stages is not necessarily carried out in sequence, but can be executed in turn or alternately with other steps or at least a part of the steps or stages in other steps.

Based on the same inventive concept, the embodiment of the present disclosure also provides a positioning apparatus for implementing the positioning method involved above. The implementation scheme for solving the problem provided by the apparatus is similar to the implementation scheme recorded in the above method, so the particular features in one or more embodiments of the positioning apparatus provided below can refer to the features in the positioning method above, and will not be repeated here.

In an embodiment, as shown in FIG. 17, a positioning apparatus is provided, including: a first determination module 11, a first obtaining module 12, and a second determination module 13.

The first determination module 11 is configured to determine, based on a photographed image captured by a camera provided on a robot, calibration information of each object in the photographed image.

The first obtaining module 12 is configured to obtain virtual point cloud data corresponding to actual point cloud data according to the actual point cloud data obtained by a LiDAR provided on the robot, a position of the camera, and a position of the LiDAR.

The second determination module 13 is configured to determine position information of each object according to the calibration information of each object and the virtual point cloud data.

The positioning apparatus provided in this embodiment can execute the above method embodiments, and its implementation principle and technical effect are similar, which will not be repeated here.

In an embodiment, the second determination module includes a first determination unit and a second determination unit.

The first determination unit is configured to match the virtual point cloud data with the calibration information of each object respectively to determine the target object corresponding to the virtual point cloud data.

The second determining unit is configured to determine the position information of the target object corresponding to the virtual point cloud data according to the actual point cloud data corresponding to the virtual point cloud data.

The positioning apparatus provided in this embodiment can execute the above method embodiments, and the implementation principle and technical effect are similar, which will not be repeated here.

Optionally, the first determining unit is specifically configured to project the virtual point cloud data onto the photographed image, and determine a proportion of the virtual point cloud data within each object's detection box.

The target object corresponding to the virtual point cloud data is determined according to the proportion.

The positioning apparatus provided in this embodiment can execute the above method embodiments, and the implementation principle and technical effect are similar, which will not be repeated here.

Optionally, the first determination unit is specifically configured to determine the object corresponding to the detection box with a proportion greater than a preset threshold as the target object, or determine the object corresponding to the detection box with a highest proportion as the target object.

The positioning apparatus provided in this embodiment can execute the above method embodiments, and the implementation principle and technical effect are similar, which will not be repeated here.

Optionally, the second determination unit is specifically configured to obtain a centroid of the target object according to the actual point cloud data of the virtual point cloud data, and determine the position of the centroid as the position information of the target object.

The positioning apparatus provided in this embodiment can execute the above method embodiments, and the implementation principle and technical effect are similar, which will not be repeated here.

In an embodiment, the first obtaining module includes a creation unit and an obtaining unit.

The creation unit is configured to create a virtual LiDAR according to the altitude of the camera and the altitude of the LiDAR.

The obtaining unit is configured to obtain the virtual point cloud data according to the actual point cloud data and the virtual LiDAR.

The positioning apparatus provided in this embodiment can execute the above method embodiments, and the implementation principle and technical effect are similar, which will not be repeated here.

In an embodiment, the positioning apparatus further includes a filtering module and a second obtaining module.

The filtering module is configured to filter out a redundant point cloud within the actual point cloud data to obtain filtered point cloud data. The redundant point cloud includes other point clouds except for the point clouds of the objects.

The second obtaining module is configured to obtain virtual point cloud data corresponding to the filtered point cloud data according to the filtered point cloud data, the position of the camera, and the position of the LiDAR.

The positioning apparatus provided in this embodiment can execute the above method embodiments, and the implementation principle and technical effect are similar, which will not be repeated here.

In an embodiment, the filtering module includes a third determining unit and a filtering unit.

The third determining unit is configured to obtain a top view of the actual point cloud data and determine a point cloud shape of the object in the top view.

The filtering unit is configured to filter out other point clouds except for the point cloud shape of each object within the actual point cloud data to obtain the filtered point cloud data.

The positioning apparatus provided in this embodiment can execute the above method embodiments, and the implementation principle and technical effect are similar, which will not be repeated here.

In an embodiment, the positioning apparatus further includes a third obtaining module.

The third obtaining module is configured to obtain virtual point cloud data corresponding to each point cloud cluster, according to each point cloud cluster, the position of the camera and the position of the LiDAR.

The positioning apparatus provided in this embodiment can execute the above method embodiments, and the implementation principle and technical effect are similar, which will not be repeated here.

Each module in the above positioning apparatus can be implemented in whole or in part by software, hardware or a combination thereof. Each module can be embedded in or independent of the processor in the robot in hardware form, or can be stored in the memory in the robot in software form, so that the processor can call and execute the operations corresponding to each module.

In an embodiment, a robot is provided, including a memory and a processor. A computer program is stored in the memory, and when the computer program is executed by the processor, any one of the contents in the above method embodiments is implemented.

In an embodiment, a computer-readable storage medium is provided, on which a computer program is stored. When the computer program is executed by a processor, any one of the contents in the above method embodiments is implemented.

In an embodiment, a computer program product is provided, including a computer program. When the computer program is executed by a processor, any one of the above method embodiments is implemented.

It should be noted that the user information (including but not limited to user apparatus information, user personal information, etc.) and data (including but not limited to data used for analysis, stored data, displayed data, etc.) involved in this disclosure are all information and data authorized by the user or fully authorized by all parties.

Those skilled in the art can understand that all or part of the processes in the above-mentioned embodiment methods can be completed by instructing the relevant hardware through a computer program, and the computer program can be stored in a non-volatile computer-readable storage medium. When the computer program is executed, it can include the processes of the embodiments of the above-mentioned methods. any reference to the memory, database or other medium used in the embodiments provided in this disclosure can include at least one of non-volatile and volatile memory.

Non-volatile memory can include read-only memory (ROM), magnetic tape, floppy disk, flash memory, optical memory, high-density embedded non-volatile memory, resistive random access memory (ReRAM), magnetoresistive random access memory (MRAM), ferroelectric random access memory (FRAM), phase change memory (PCM), graphene memory, etc. Volatile memory can include random access memory (RAM) or external cache memory, etc. As an illustration and not limitation, RAM can be in various forms, such as static random access memory (SRAM) or dynamic random access memory (DRAM). The database involved in each embodiment provided in this disclosure may include at least one of a relational database and a non-relational database. Non-relational databases may include distributed databases based on blockchains, etc., but are not limited to this. The processor involved in each embodiment provided in this disclosure may be a general-purpose processor, a central processing unit, a graphics processor, a digital signal processor, a programmable logic device, a data processing logic device based on quantum computing, etc., but are not limited to this.

The technical features of the above-described embodiments may be arbitrarily combined. To make the description concise, not all possible combinations of the technical features in the above-described embodiments are described. However, as long as there is no contradiction in the combination of these technical features, they should be considered to be within the scope of this specification.

The above-described embodiments only express several implementation methods of the present disclosure, and the descriptions thereof are relatively particular and detailed, but they cannot be construed as limiting the scope of the patent disclosure. It should be pointed out that, for a person of ordinary skill in the art, several variations and improvements can be made without departing from the concept of the present disclosure, and these all belong to the protection scope of the present disclosure. Therefore, the protection scope of the patent disclosure shall be subject to the attached claims.

**Claims**

1. A positioning method, applied to a robot, comprising:

   determining, based on a photographed image captured by a camera provided on the robot, calibration information of each object in the photographed image;
   obtaining, based on actual point cloud data obtained by a LiDAR provided on the robot, a position of the camera, and a position of the LiDAR, virtual point cloud data corresponding to the actual point cloud data; and
   determining position information of each object based on the calibration information of each object and the virtual point cloud data.

2. The method according to claim 1, wherein determining the position information of each object based on the calibration information of each object and the virtual point cloud data comprises:

   matching the virtual point cloud data with the calibration information of each object respectively to determine a target object corresponding to the virtual point cloud data; and
   determining position information of the target object corresponding to the virtual point cloud data based on the actual point cloud data corresponding to the virtual point cloud data.

3. The method according to claim 2, wherein the calibration information comprises a detection box, and matching the virtual point cloud data with the calibration information of each object respectively to determine the target object corresponding to the virtual point cloud data comprises:

   projecting the virtual point cloud data onto the photographed image, and determining a proportion of the virtual point cloud data within the detection box of each object; and
   determining the target object corresponding to the virtual point cloud data according to the proportion.

4. The method according to claim 3, wherein determining the target object corresponding to the virtual point cloud data according to the proportion comprises:

   determining the object corresponding to the detection box whose proportion is greater than a preset threshold as the target object; or,
   determining the object corresponding to the detection box with a highest proportion as the target object.

5. The method according to claim 2, wherein determining the position information of the target object corresponding to the virtual point cloud data, based on the actual point cloud data corresponding to the virtual point cloud data comprises:

   obtaining a centroid of the actual point cloud data; and
   determining a position of the centroid as the position information of the target object.

6. The method according to any one of claims 1 to 4, wherein the position of the camera comprises an altitude of the camera, the position of the LiDAR comprises an altitude of the LiDAR, and obtaining, based on the actual point cloud data obtained by the LiDAR provided on the robot, the position of the camera, and the position of the LiDAR, the virtual point cloud data corresponding to the actual point cloud data comprises:

> creating a virtual LiDAR according to the altitude of the camera and the altitude of the LiDAR; and obtaining the virtual point cloud data according to the actual point cloud data and the virtual LiDAR.

7. The method according to claim 6, wherein creating the virtual LiDAR according to the altitude of the camera and the altitude of the LiDAR comprises:

> determining the altitude of the camera as an altitude of the virtual LiDAR;
> determining intrinsic parameters and extrinsic parameters of the virtual LiDAR according to intrinsic parameters and extrinsic parameters of the LiDAR; and
> creating the virtual LiDAR according to the altitude of the virtual LiDAR, the intrinsic parameters and the extrinsic parameters of the virtual LiDAR.

8. The method according to claim 7, wherein the intrinsic parameters comprise resolution and field of view, and the extrinsic parameters comprise position information and angle information.

9. The method according to claim 8, wherein obtaining the virtual point cloud data according to the actual point cloud data and the virtual LiDAR comprises:

> determining a virtual point cloud plane of the virtual LiDAR based on the intrinsic parameters and extrinsic parameters of the virtual LiDAR; and
> projecting the actual point cloud data onto the virtual point cloud plane to obtain the virtual point cloud data.

10. The method according to any one of claims 1 to 4, wherein the method further comprises:

> filtering out a redundant point cloud within the actual point cloud data to obtain filtered point cloud data, the redundant point cloud comprising other point clouds except for the objects; and
> obtaining, based on the actual point cloud data obtained by the LiDAR provided on the robot, the position of the camera, and the position of the LiDAR, the virtual point cloud data corresponding to the actual point cloud data comprises:
> obtaining virtual point cloud data corresponding to the filtered point cloud data based on the filtered point cloud data, the position of the camera, and the position of the LiDAR.

11. The method according to claim 10, wherein filtering out the redundant point cloud within the actual point cloud data to obtain the filtered point cloud data comprises:

> obtaining a point cloud shape of the object within the actual point cloud data; and
> filtering out other point clouds within the actual point cloud data except for the point cloud shapes of the objects to obtain the filtered point cloud data.

12. The method according to claim 11, wherein filtering out other point clouds within the actual point cloud data except for the point cloud shapes of the objects to obtain the filtered point cloud data comprises:

> detecting a discrete point cloud within the actual point cloud data by a filter, and detecting a linear point cloud within the actual point cloud data by a straight line detection algorithm; and
> filtering out the discrete point cloud and the linear point cloud within the actual point cloud data to obtain the filtered point cloud data.

13. The method according to claim 12, wherein the straight line detection algorithm comprises Hough straight line detection or straight line segment detection.

14. The method according to claim 10, wherein the method further comprises:

> clustering the filtered point cloud data to obtain multiple point cloud clusters; and
> obtaining the virtual point cloud data corresponding to the filtered point cloud data based on the filtered point cloud data, the position of the camera, and the position of the LiDAR comprises:
> obtaining the virtual point cloud data corresponding to each point cloud cluster based on each point cloud cluster, the position of the camera and the position of the LiDAR.

15. The method according to any one of claims 1 to 4, wherein determining, based on the photographed image captured by the camera provided on the robot, the calibration information of each object in the photographed image comprises:
detecting each object in the photographed image by a target detection model and calibrating each object to obtain the calibration information of each object in the photographed image.

16. The method according to claim 15, wherein the detection box of each object is any one of a rectangular, circular, semicircular and irregular shape.

17. The method according to any one of claims 1 to 4, wherein the position information comprises at least one of distance information, orientation information, altitude information, speed information or posture information.

18. A positioning apparatus, applied to a robot, comprising:

a first determination module configured to determine, based on a photographed image captured by a camera provided on the robot, calibration information of each object in the photographed image;

a first obtaining module configured to obtain, based on actual point cloud data obtained by a LiDAR provided on the robot, a position of the camera, and a position of the LiDAR, virtual point cloud data corresponding to the actual point cloud data; and

a second determination module configured to determine position information of each object based on the calibration information of each object and the virtual point cloud data.

19. A robot comprising a memory and a processor, wherein the memory stores a computer program, and when the computer program is executed by the processor, the steps of the methods according to any one of claims 1 to 17 are implemented.

20. A computer-readable storage medium having a computer program stored thereon, wherein when the computer program is executed by a processor, the steps of the method according to any one of claims 1 to 17 are implemented.

Operating System

Computer Program

Database

Non-Volatile Storage Medium

Processor

Internal Memory

System Bus

Input/output Interface

Communication
Interface

Robot

FIG. 1

Based on a photographed image captured by a camera provided on
the robot, determining calibration information of each object in the
photographed image,

S201

Based on actual point cloud data obtained by a LiDAR provided on
the robot, a position of the camera, and a position of the LiDARA,
obtaining virtual point cloud data corresponding to the actual point
cloud data

S202

Determining position information of each object based on the
calibration information of each object and the virtual point cloud
data

S203

FIG. 2

FIG. 3

FIG. 4

| Matching the virtual point cloud data with the calibration information of each object respectively to determine a target object corresponding to the virtual point cloud data | S501 |
|---|---|

| Determining position information of the target object corresponding to the virtual point cloud data based on the actual point cloud data corresponding to the virtual point cloud data | S502 |
|---|---|

FIG. 5

Projecting the virtual point cloud data onto the photographed image, and determining the proportion of the virtual point cloud data within each object's detection box ⟿ S601

Determining the target object corresponding to the virtual point cloud data according to the proportion ⟿ S602

FIG. 6

Obtaining a centroid of the actual point cloud data ⟿ S701

Determining a position of the centroid as the position information of the target object ⟿ S702

FIG. 7

Creating a virtual LiDAR according to the altitude of the camera and the altitude of the LiDAR ⟿ S801

Obtaining virtual point cloud data according to the actual point cloud data and the virtual LiDAR ⟿ S802

FIG. 8

Filtering out a redundant point cloud within the actual point cloud data to obtain filtered point cloud data ⟿ S901

Obtaining virtual point cloud data corresponding to the filtered point cloud data, according to the filtered point cloud data, the position of the camera, and the position of the LiDAR ⟿ S902

FIG. 9

| Obtaining a point cloud shape of the object within the actual point cloud data | S1001 |

| Filtering out other point clouds within the actual point cloud data except for the point cloud shapes of the objects to obtain the filtered point cloud data | S1002 |

FIG. 10

FIG. 11

FIG. 12

| Clustering the filtered point cloud data to obtain multiple point cloud clusters | S1301 |

| Obtaining the virtual point cloud data corresponding to each point cloud cluster, according to each point cloud cluster, the position of the camera and the position of the LiDAR | S1302 |

FIG. 13

FIG. 14

17

Based on a photographed image captured by a camera provided on a robot, determining calibration information of each object in the photographed image — S1501

Creating a virtual LiDAR according to an altitude of the camera and an altitude of the LiDAR — S1502

Obtaining a point cloud shape of the object within actual point cloud data — S1503

Filtering out other point clouds except for the point cloud shape of each object within the actual point cloud data to obtain filtered point cloud data — S1504

Clustering the filtered point cloud data to obtain multiple point cloud clusters — S1505

Obtaining virtual point cloud data corresponding to each point cloud cluster, according to each point cloud cluster, a position of the camera, and a position of the LiDAR — S1506

Projecting the virtual point cloud data onto the photographed image, and determining a proportion of the virtual point cloud data within each object's detection box — S1507

Determining an object corresponding to the detection box whose proportion is greater than the preset threshold as a target object, or determine an object corresponding to the detection box with the highest proportion as the target object — S1508

Obtaining a centroid of the actual point cloud data — S1509

Determining a position of the centroid as position information of the target object — S1510

FIG. 15

18

virtual point cloud data

1          2

actual point cloud data

FIG. 16

11          12          13

| First determination module | First obtaining module | Second determination module |

Positioning apparatus

FIG. 17

## INTERNATIONAL SEARCH REPORT

| International application No. |
|---|
| **PCT/CN2023/118452** |

| **A.** | **CLASSIFICATION OF SUBJECT MATTER** |
|---|---|

G01S 17/06(2006.01)i; G01S17/86(2020.01)i; G01S7/48(2006.01)i; G06V20/64(2022.01)i; G06V10/762(2022.01)i; G06T7/80(2017.01)i; G06T 7/73(2017.01)i

According to International Patent Classification (IPC) or to both national classification and IPC

| **B.** | **FIELDS SEARCHED** |
|---|---|

Minimum documentation searched (classification system followed by classification symbols)

IPC: G01S, G06V, G06T

Documentation searched other than minimum documentation to the extent that such documents are included in the fields searched

Electronic data base consulted during the international search (name of data base and, where practicable, search terms used)

CNTXT, CNABS, CNKI, ENTXT: 相机, 激光雷达, 点云, 图像, 虚拟, 假, 位置, virtual, point cloud, image, camera, laser radar, lidar, position

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 116243324 A (SHENZHEN PUDU TECHNOLOGY CO., LTD.) 09 June 2023 (2023-06-09)<br>description, paragraphs 62-183, and figures 1-17 | 1-20 |
| A | CN 111563398 A (BEIJING JINGDONG SHANGKE INFORMATION TECHNOLOGY CO., LTD. et al.) 21 August 2020 (2020-08-21)<br>description, paragraphs 44-69 and 113, and figure 2 | 1-20 |
| A | CN 112001958 A (ZHEJIANG ENERGY R&D INSTITUTE CO., LTD.) 27 November 2020 (2020-11-27)<br>entire document | 1-20 |
| A | CN 114078145 A (BEIJING WANJI TECHNOLOGY CO., LTD.) 22 February 2022 (2022-02-22)<br>entire document | 1-20 |
| A | CN 114119729 A (BEIJING AI FOR RAIL TECHNOLOGY CO., LTD.) 01 March 2022 (2022-03-01)<br>entire document | 1-20 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 December 2023** | **18 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/118452** |

| C. | DOCUMENTS CONSIDERED TO BE RELEVANT | |
|---|---|---|
| Category* | Citation of document, with indication, where appropriate, of the relevant passages | Relevant to claim No. |
| A | KR 102014097 B1 (NANOSYSTEMS) 26 August 2019 (2019-08-26)<br>entire document | 1-20 |

Form PCT/ISA/210 (second sheet) (July 2022)

**INTERNATIONAL SEARCH REPORT**
Information on patent family members

International application No.

**PCT/CN2023/118452**

| Patent document cited in search report | | | Publication date (day/month/year) | Patent family member(s) | Publication date (day/month/year) |
|---|---|---|---|---|---|
| CN | 116243324 | A | 09 June 2023 | None | |
| CN | 111563398 | A | 21 August 2020 | None | |
| CN | 112001958 | A | 27 November 2020 | None | |
| CN | 114078145 | A | 22 February 2022 | None | |
| CN | 114119729 | A | 01 March 2022 | None | |
| KR | 102014097 | B1 | 26 August 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022115341643